Europäisches Patentamt

**European Patent Office**

**Office européen des brevets**

(19)

(11) Numéro de publication : **0 029 624**
**B1**

(12)

# FASCICULE DE BREVET EUROPÉEN

(45) Date de publication du fascicule du brevet : **21.03.84**

(51) Int. Cl.³ : **C 12 C   9/04**

(21) Numéro de dépôt : **80201038.9**

(22) Date de dépôt : **03.11.80**

(54) Procédé et appareil collecteur de moût chaud et séparateur du trub et des houblons épuisés.

(30) Priorité : **14.11.79 LU 81885**

(43) Date de publication de la demande :
**03.06.81 Bulletin 81/22**

(45) Mention de la délivrance du brevet :
**21.03.84 Bulletin 84/12**

(84) Etats contractants désignés :
**AT BE CH DE FR GB IT LI NL SE**

(56) Documents cités :
**BE-A-   386 683**
**DE-A- 2 525 445**
**DE-A- 2 708 697**
**DE-C-   213 147**
**FR-A-   902 269**
**FR-A- 2 140 441**
**US-A- 2 438 590**
**Le dossier contient des Informations techniques présentées postérieurement au dépôt de la demande et ne figurant pas dans le présent fascicule.**

(73) Titulaire : **COMPAGNIE INTERNATIONALE DE PARTI-
CIPATION ET D'INVESTISSEMENT CIPARI S.A.**
**4-10 Boulevard d'Avranches**
**Luxembourg (LU)**

(72) Inventeur : **Devreux, André Fernand**
**60, Rue Buisseret**
**B-7000 Mons (BE)**

(74) Mandataire : **De Brabanter, Maurice et al**
**Bureau VANDER HAEGHEN 63 Avenue de la Toison d'Or**
**B-1060 Bruxelles (BE)**

Procédé et appareil collecteur de moût chaud et séparateur du trub et des houblons épuisés.

La présente invention est relative à un procédé et à un appareil pour clarifier un moût chaud de brasserie, en le débarrassant du trub et du houblon épuisé qu'il contient, dans lequel procédé on introduit du moût chaud à la partie supérieure d'un premier réservoir servant de décanteur à fond incliné ayant une capacité au moins égale au volume d'un brassin et, tandis que l'on permet au trub et au houblon épuisé de descendre par gravité vers le fond incliné dudit premier réservoir, on soutire du moût clarifié de ce premier réservoir par un premier conduit ayant une extrémité libre flottant en permanence à la surface du moût contenu dans le premier réservoir.

L'invention vise un procédé et un appareil de conception extrêmement simple permettant d'éliminer, entre les phases d'ébullition et de refroidissement du moût, au cours de la fabrication de bière, le trub et le houblon épuisé, ce procédé et cet appareil étant agencés pour permettre la récupération du moût imbibant le houblon épuisé et éviter la pollution des eaux usées.

On connaît plusieurs procédés et appareils permettant d'éliminer le trub et le houblon épuisé de moûts chauds.

Un premier procédé connu implique une décantation dans un bac à moût chaud suivie d'un tamisage dans un second bac muni d'un tamis. Le houblon épuisé contenu dans le moût chaud introduit dans ce bac est retenu par le tamis, tandis que le trub se dépose sur le fond du bac à moût chaud.

Bien que ce procédé et cet appareil connus soient relativement peu coûteux, ils exigent une main-d'œuvre importante pour la vidange du houblon épuisé et du trub. Par ailleurs, le rejet du houblon épuisé et du trub pose un problème important de pollution. Au surplus, il est nécessaire, pour des raisons économiques, de récupérer le moût qui imbibe le houblon par lavage de celui-ci, tandis qu'une perte notable de moût a lieu dans le trub, dont ce moût est inséparable par décantation.

Un deuxième procédé connu implique une filtration du houblon épuisé dans un bac muni d'un tamis et une séparation du trub par centrifugation.

Ce procédé exige donc l'emploi d'un bac de filtration et d'une centrifugeuse, le moût débarrassé du houblon épuisé dans le bac de filtration étant amené dans une centrifugeuse où le trub en est séparé.

L'appareillage à utiliser dans ce second procédé connu exige un investissement très élevé et des frais importants d'entretien de la centrifugeuse, tandis qu'il ne permet pas d'éviter une pollution importante lors du rejet du houblon épuisé et du trub.

On connaît un troisième procédé dénommé « whirlpool » dans lequel on introduit le moût chaud tangentiellement dans une cuve cylindrique dans laquelle ce moût est soumis à un mouvement rotatif, le houblon épuisé et le trub étant recueillis au centre du fond de la cuve cylindrique.

Ce troisième procédé exige aussi une main-d'œuvre importante pour la surveillance du procédé et la vidange de la cuve. Le houblon épuisé et le trub entraînent une perte de moût importante qui n'est récupérable que par adjonction à la cuve d'un bac supplémentaire de décantation. De toute manière, le procédé « whirlpool » cause une pollution très élevée des eaux usées. De plus, le fonctionnement de l'appareil est aléatoire et le procédé est lent, car il exige près de deux heures et demie pour séparer le houblon épuisé et le trub d'un seul brassin.

On connaît aussi, par le FR-A-902 269, un procédé d'élimination des produits solides du moût de brasserie au moyen d'un appareil comportant une cuve à fond incliné capable de contenir la totalité d'un brassin, et un flotteur articulé pour soutirer du moût, le fond de la cuve étant relié à un séparateur centrifuge. Le FR-A-2 140 441 décrit un procédé analogue dans lequel on utilise, au lieu d'un séparateur centrifuge, une seconde cuve pourvue d'un agitateur et d'injecteurs d'eau.

Enfin, on connaît par le DE-A-2 708 697 un procédé et un appareil pour séparer le trub d'un moût de brasserie froid, en présence de levure, dans une cuve de fermentation à fond incliné. Selon le DE-A-2 708 697, le moût contenu dans la cuve de fermentation est soumis, pendant la fermentation par la levure, à un mouvement accéléré en direction verticale à travers une section réduite de la cuve de fermentation, en sorte que le trub est recueilli en dessous de cette partie de section réduite dans un récipient de petite capacité dans lequel a été introduit de la levure, le mouvement précité étant causé par l'anhydride carbonique formé par la fermentation du moût.

La présente invention a pour objet un procédé et un appareil permettant de clarifier un moût chaud, en le débarrassant du trub et du houblon épuisé qu'il contient, de manière extrêmement rapide et sûre, par un soutirage immédiat et continu de moût clarifié dès qu'il a été introduit dans une cuve de décantation.

Le procédé défini dans le premier paragraphe du présent mémoire est essentiellement caractérisé en ce que l'on soutire du moût clarifié du premier réservoir faisant office de décanteur, par le premier conduit susdit, on permet au trub et au houblon épuisé de se déposer dans un second réservoir servant de collecteur ayant une capacité égale à 2 à 5 % de celle du premier réservoir, en maintenant ouverte une vanne ménagée dans un second conduit reliant le premier réservoir au second réservoir, on interrompt le soutirage de moût clarifié par le premier conduit précité lorsque tout le trub et le houblon épuisé ont été recueillis dans le second réservoir, puis on ferme la vanne montée dans le second conduit susdit et on soutire le reste du moût clarifié du premier réservoir par le fond de celui-ci.

Selon une particularité du procédé suivant l'invention, on soutire le reste du moût clarifié du premier réservoir, faisant office de décanteur, après fermeture de la vanne montée dans le second conduit précité, en ouvrant une vanne montée dans un troisième conduit raccordé à ce second conduit, en amont de la vanne dont est muni ce second conduit.

Selon une autre particularité du procédé suivant l'invention, on interrompt le soutirage de moût clarifié du premier réservoir par le premier conduit à extrémité flottante et on amorce le soutirage du reste du moût clarifié contenu dans le premier réservoir par le fond de celui-ci, lorsque le moût y atteint un niveau prédéterminé auquel tout le trub et le houblon épuisé ont été recueillis dans le second réservoir.

L'appareil pour la mise en œuvre du procédé suivant l'invention, qui comprend un premier réservoir à fond incliné servant de décanteur dont la capacité est au moins égale à celle d'un brassin et qui présente, à sa partie supérieure, une entrée pour du moût chaud et une communication avec l'atmosphère, un second réservoir ayant une capacité de 2 à 5 % de celle du premier réservoir, un premier conduit ayant une extrémité libre capable de flotter en permanence à la surface de moût chaud introduit clarifié du premier réservoir, ainsi qu'un second conduit muni d'une vanne reliant le premier réservoir au second réservoir, est essentiellement caractérisé en ce qu'il comporte un troisième conduit muni d'une vanne permettant de soutirer le restant du moût clarifié du premier réservoir, par le fond de celui-ci.

Selon une particularité de l'appareil suivant l'invention, le troisième conduit précité est relié au second conduit précité en amont de la vanne montée dans ce second conduit.

Selon une autre particularité de l'appareil suivant l'invention, ce dernier comporte des moyens pour interrompre le soutirage de moût clarifié du premier réservoir, lorsque le niveau du moût est descendu dans ce premier réservoir jusqu'à un niveau prédéterminé, ces moyens provoquant, de préférence simultanément, la fermeture de la vanne prévue dans le conduit reliant le premier réservoir au second réservoir et l'ouverture de la vanne prévue dans le troisième conduit précité pour soutirer le reste du moût clarifié du premier réservoir.

D'autres particularités et détails de l'invention ressortiront de la description suivante d'une forme de réalisation du procédé et de l'appareil suivant l'invention, choisie à seul titre d'exemple.

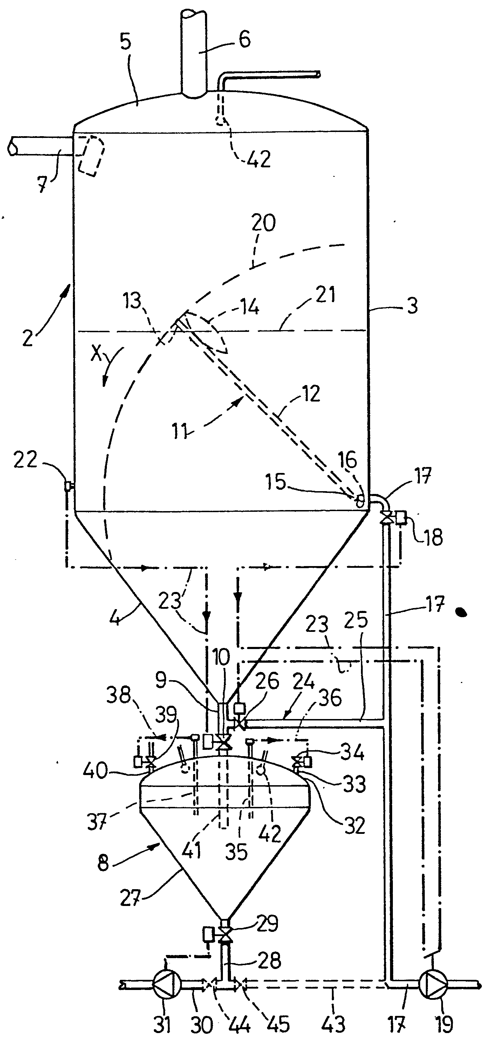

Dans cette description, il est fait référence à la figure unique (figure 1) du dessin ci-annexé qui est une vue schématique en élévation d'un appareil suivant l'invention.

L'appareil représenté sur le dessin comprend un premier réservoir de grande capacité désigné par la notation de référence 2. Dans la forme de réalisation montrée, ce premier réservoir se compose d'une partie cylindrique 3 et d'un fond conique 4. Au lieu d'être cylindro-conique, le réservoir 2 peut être conique ou pyramidal ou peut présenter un fond incliné quelconque. Ce premier réservoir est fermé à sa partie supérieure par une coiffe 5 au centre de laquelle débouche un tube 6 assurant une communication entre l'intérieur du réservoir 2 et l'atmosphère extérieure. Au voisinage de sa partie supérieure, le réservoir 2 est muni d'une conduite 7 d'entrée de moût qui peut se présenter sous forme d'un T.

Le réservoir 2 est un réservoir de grande capacité convenant pour recueillir le moût chaud d'un brassin entier. La capacité du réservoir 2 peut être égale au volume d'un brassin de moût augmenté d'environ 10 %, ce volume supplémentaire étant destiné à contenir les mousses.

En dessous du premier réservoir 2 et coaxialement à celui-ci est monté un second réservoir 8 de petite capacité, qui est destiné à recueillir par gravité le trub et le houblon épuisé en suspension dans le moût chaud introduit dans le réservoir supérieur 2. Au lieu de se trouver en dessous du premier réservoir 2, le second réservoir 8 peut se trouver à côté de celui-ci, étant cependant entendu que le niveau du second réservoir 8 doit être inférieur à celui du premier réservoir 2, afin de permettre une précipitation par gravité du trub et du houblon épuisé dans le fond du premier réservoir 2 et de recueillir ce trub et ce houblon avec un minimum de moût dans le second réservoir 8. Ce dernier a une capacité inférieure à celle du premier réservoir 2, cette capacité pouvant être comprise entre environ 2 % et 5 % de celle de ce premier réservoir 2.

Le premier réservoir 2 est relié au second réservoir 8 par un tuyau 9 muni d'une vanne 10 normalement ouverte.

Dans le premier réservoir 2 de grande capacité est monté un premier dispositif de soutirage de moût chaud 11 constitué par un tuyau 12 montré en traits interrompus sur le dessin, ce tuyau étant muni à son extrémité ouverte libre 13 d'un flotteur schématisé en 14. L'extrémité opposée 15 du tuyau 12 est articulée en 16 à un tuyau fixe 17 pourvu d'une vanne 18 normalement ouverte et d'une pompe 19 pour l'évacuation du moût. En pivotant autour de l'articulation 16, l'extrémité libre 13 du tuyau 12 suit une trajectoire circulaire schématisée par la ligne en traits interrompus 20, cette extrémité libre 13 descendant dans le sens de la flèche X, en suivant la trajectoire 20, à mesure que du moût débarrassé du trub et du houblon épuisé est soutiré du réservoir 2 par ladite extrémité libre 13 du tuyau 12 qui flotte sur la surface libre 21 de la masse liquide contenue dans ce réservoir 2.

Le réservoir 2 est muni d'une sonde 22, de telle sorte que, lorsque l'extrémité libre 13 du tuyau 12 atteint un niveau prédéterminé, cette sonde 22 assure la fermeture de la vanne 18, ce qui interrompt le soutirage du moût par le premier dispositif de soutirage 11 ; la commande électrique de la vanne 18 par la sonde 22 est schématisée par la ligne en traits mixtes 23.

Il est à noter que lors du remplissage du réservoir 2 par un nouveau brassin de moût, la sonde 22 commande l'ouverture de la vanne 18 et assure ainsi la mise en fonctionnement immédiate du premier dispositif de soutirage de moût 11, dès que le réservoir 2 est rempli de moût chaud.

Pendant le soutirage de moût par le premier dispositif de soutirage 11, le trub et le houblon épuisé y contenus descendent par gravité vers le fond du premier réservoir 2 et passent dans le second réservoir 8 par le tuyau 9, dont la vanne 10 est ouverte.

Au moment où la sonde 22 interrompt le soutirage de moût par le premier dispositif de soutirage 11, le trub et le houblon ont été pratiquement amenés en totalité dans le second réservoir 8. A ce moment, la sonde 22 assure la mise en service d'un second dispositif de soutirage de moût 24 qui comporte un tuyau 25 muni d'une vanne 26, ce tuyau 25 étant branché, d'une part, sur le tuyau d'évacuation de moût 17 et, d'autre part, sur le tuyau 9, en amont de la vanne 10 dont ce tuyau 9 est muni. La sonde 22 assure aussi, à ce moment, la fermeture de la vanne 10, de sorte que le restant du moût clarifié se trouvant dans le réservoir de grande capacité 2 peut être évacué par le tuyau 25 et le tuyau 17.

L'ouverture et la fermeture des vannes 10, 18 et 26 sont commandées électriquement (comme montré par les traits mixtes 23) par la sonde 22.

Le second réservoir de petite capacité 8 servant de collecteur de trub et de houblon épuisé présente, tout comme le premier réservoir 2, un fond conique 27 dans lequel débouche un tuyau 28 servant à l'évacuation du trub et du houblon épuisé. Ce tuyau 28 est muni d'une vanne normalement fermée 29 et est raccordé à un tuyau 30 dans lequel est montée une pompe 31, ce tuyau 30 alimentant un filtre-presse ou un filtre d'un autre type (non représenté) où le moût résiduel sera récupéré.

Le second réservoir 8 présente une coiffe bombée 32 dans laquelle débouche un tuyau 33 muni d'une vanne 34, cet ensemble servant de purgeur d'air. Une sonde réglable 35 peut être prévue dans le second réservoir 8, cette sonde pouvant commander électriquement, comme schématisé par la ligne en traits mixtes 36, la fermeture de la vanne 34 du purgeur lorsque la masse de trub et le houblon épuisé atteint un niveau prédéterminé dans le réservoir collecteur 8.

Par ailleurs, une seconde sonde 37 peut être prévue dans le second réservoir 8. Cette seconde sonde 37 commande l'entrée d'un gaz comprimé, tel que de l'air comprimé, dans le second réservoir. Ainsi, lorsque la masse de trub et de houblon épuisé atteint un second niveau prédéterminé dans le réservoir 8, ce second niveau étant supérieur au premier niveau détecté par la sonde 35, la sonde 37 commande électriquement (comme montré par la ligne en traits mixtes 38) une vanne 39 montée dans un tuyau 40 relié, d'une part, à une source de gaz comprimé (non montrée) et débouchant, d'autre part, dans le réservoir 8. Le gaz comprimé sous une pression égale, par exemple, à 1,5 bar, sert lorsqu'il est admis dans le réservoir 8, à y maintenir la surface libre de la masse de trub et de houblon épuisé à un niveau constant.

Dans le cas où le second réservoir 8 est équipé des sondes 35 et 37, le tuyau 9 est prolongé par une partie 41 qui s'étend dans ce réservoir 8 jusqu'à un niveau inférieur à celui de la sonde 35.

L'appareil décrit plus haut peut comporter, en outre, dans les réservoirs 2 et 8, des dispositifs 42, tels que des gicleurs ou des rampes de pulvérisation, pour le nettoyage desdits réservoirs. Ces dispositifs 42 sont reliés à une source d'un liquide de nettoyage (non montrée) et le liquide de nettoyage est évacué par une conduite 43 raccordée, d'une part, au tuyau 28 en aval de la vanne 29 de ce tuyau et, d'autre part, au tuyau d'évacuation de moût 17, en amont de la pompe 19 dont est muni ce tuyau 17.

Pour l'évacuation du liquide de nettoyage, une vanne 44 prévue dans le tuyau 30 en amont de la pompe 31 est fermée, tandis que la vanne 29 du tuyau 28 et une vanne 45 de la conduite 43 sont ouvertes.

L'appareil décrit ci-dessus fonctionne comme suit.

Le moût bouillant sortant de la chaudière d'ébullition (non représentée) est pompé à la partie supérieure de l'appareil, la vanne 10 reliant les deux réservoirs 2 et 8 étant ouverte, tandis que toutes les autres vannes sont fermées. Le moût remplit donc les deux réservoirs 2 et 8.

Immédiatement après le pompage du moût, on commence à soutirer du moût par le premier dispositif de soutirage 11. Le trub et le houblon épuisé descendent dans le bas du réservoir 2, passent la vanne 10 et descendent dans le réservoir inférieur 8. Après au moins une demi-heure de soutirage, et ceci, soit automatiquement grâce à la sonde de niveau 22, soit manuellement, on ferme la vanne 18 de soutirage du tube flottant 12 et la vanne 10 de séparation entre les réservoirs 2 et 8 et on ouvre la vanne de vidange inférieure 26 reliée au tuyau 9 contenant la vanne 10 de séparation entre les deux réservoirs 2 et 8. Le soutirage continue donc par le bas du réservoir supérieur 2.

A partir de ce moment jusqu'au remplissage du réservoir supérieur 2 par le brassin suivant, le trub et le houblon épuisé sont à disposition pour être pompés vers une cuve de filtration ou le filtre-presse (non montré).

Si, pour des raisons quelconques, les réservoirs 2 et 8 ne sont pas placés l'un sur l'autre mais côte à côte, la séparation s'opère en deux épisodes. Après la décantation dans le réservoir principal 12, le précipité est poussé ou pompé dans le réservoir secondaire 8.

**Revendications**

1. Procédé pour clarifier un moût chaud de brasserie, en le débarrassant du trub et du houblon épuisé qu'il contient, dans lequel procédé on introduit du moût chaud à la partie supérieure d'un premier réservoir servant de décanteur à fond incliné ayant une capacité au moins égale au volume d'un brassin et, tandis que l'on permet au trub et au houblon épuisé de descendre par gravité vers le fond incliné dudit premier réservoir, on soutire du moût clarifié de ce premier réservoir par un premier conduit ayant une extrémité libre flottant en permanence à la surface du moût contenu dans le premier réservoir, caractérisé en ce que, pendant que l'on soutire du moût clarifié du premier réservoir, faisant office de décanteur, par le premier conduit susdit, on permet au trub et au houblon épuisé de se déposer dans un second réservoir servant de collecteur ayant une capacité égale à 2 à 5 % de celle du premier réservoir, en maintenant ouverte une vanne ménagée dans un second conduit reliant le premier réservoir au second réservoir, puis on ferme la vanne montée dans le second conduit susdit et on soutire le reste du moût clarifié du premier réservoir par le fond de celui-ci.

2. Procédé suivant la revendication 1, caractérisé en ce qu'on soutire le reste du moût clarifié du premier réservoir, faisant office de décanteur, après fermeture de la vanne montée dans le second conduit précité, en ouvrant une vanne montée dans un troisième conduit raccordé à ce second conduit, en amont de la vanne dont est muni ce second conduit.

3. Procédé suivant l'une quelconque des revendications 1 et 2, caractérisé en ce qu'on interrompt le soutirage de moût du premier réservoir par le premier conduit à extrémité flottante et on amorce le soutirage du reste du moût clarifié contenu dans le premier réservoir par le fond de celui-ci, lorsque le moût y atteint un niveau prédéterminé auquel tout le trub et le houblon épuisé ont été recueillis dans le second réservoir.

4. Procédé suivant l'une quelconque des revendications précédentes, caractérisé en ce qu'on évacue le trub et le houblon épuisé du second réservoir par ouverture d'une vanne prévue dans un quatrième conduit raccordé au fond de ce second réservoir, tandis que la vanne montée dans le second conduit reliant le premier réservoir au second réservoir est fermée.

5. Procédé suivant l'une quelconque des revendications précédentes, caractérisé en ce qu'on maintient le second réservoir en communication avec l'atmosphère jusqu'à ce que la masse de trub et de houblon épuisé recueillie dans le second réservoir atteint un premier niveau prédéterminé.

6. Procédé suivant la revendication 5, caractérisé en ce que, lorsque la masse de trub et de houblon épuisé atteint, dans le second réservoir, un second niveau prédéterminé supérieur au premier niveau prédéterminé, on introduit un gaz comprimé dans le second réservoir, en vue d'y maintenir un niveau constant de la masse de trub et de houblon épuisé.

7. Appareil pour la mise en œuvre du procédé suivant l'une quelconque des revendications précédentes, comprenant un premier réservoir à fond incliné servant de décanteur dont la capacité est au moins égale à celle d'un brassin et qui présente, à sa partie supérieure, une entrée pour du moût chaud et une communication avec l'atmosphère, un second réservoir ayant une capacité de 2 à 5 % de celle du premier réservoir, un premier conduit ayant une extrémité libre capable de flotter en permanence à la surface de moût chaud introduit dans le premier réservoir et servant à soutirer du moût clarifié du premier réservoir, ainsi qu'un second conduit muni d'une vanne reliant le premier réservoir au second réservoir, caractérisé en ce qu'il comporte un troisième conduit muni d'une vanne permettant de soutirer le restant du moût clarifié du premier réservoir, par le fond de celui-ci.

8. Appareil suivant la revendication 7, caractérisé en ce que le troisième conduit précité est relié au second conduit précité en amont de la vanne montée dans ce second conduit.

9. Appareil suivant l'une quelconque des revendications 7 et 8, caractérisé en ce qu'il comporte des moyens pour interrompre le soutirage de moût clarifié du premier réservoir, lorsque le niveau du moût est descendu dans ce premier réservoir jusqu'à un niveau prédéterminé.

10. Appareil suivant la revendication 9, caractérisé en ce que les moyens susdits provoquent simultanément la fermeture de la vanne prévue dans le conduit reliant le premier réservoir au second réservoir et l'ouverture de la vanne prévue dans le troisième conduit précité pour soutirer le reste du moût clarifié du premier réservoir.

11. Appareil suivant l'une quelconque des revendications 7 à 10, caractérisé en ce qu'un quatrième conduit muni d'une vanne est relié au fond du second réservoir pour en évacuer le trub et le houblon épuisé, lorsque la vanne prévue dans le second conduit susdit est fermée.

12. Appareil suivant l'une quelconque des revendications 7 à 11, caractérisé en ce que le second réservoir est muni à sa partie supérieure d'un dispositif permettant de le mettre en communication avec l'atmosphère.

13. Appareil suivant l'une quelconque des revendications 7 à 12, caractérisé en ce que le second réservoir est muni à sa partie supérieure d'un dispositif permettant de le mettre en communication avec une source de gaz comprimé servant à maintenir un niveau prédéterminé dans ce second réservoir.

**Claims**

1. Process for clarifying a warm brewery wort by removing from it the sludge and spent hops which it contains, in which process the warm wort is introduced in the upper part of a first tank serving as a decanter with an inclined bottom, having a capacity at least equal to the volume of a mashtub, and, whilst the sludge and spent hops are allowed to descend as a result of gravity towards the inclined bottom of the said first tank, clarified wort is drawn off from this first tank via a first pipe having a free end floating permanently on the surface of the wort contained in the first tank, characterised in that, during the time when clarified wort is being drawn off from the first tank, acting as a decanter, via the first aforesaid pipe, the sludge and spent hops are allowed to settle in a second tank serving as a collector, having a capacity equal to 2 to 5 % of that of the first tank, by keeping open a valve located in a second pipe connecting the first tank to the second tank, the valve mounted in the second aforesaid pipe is then closed, and the rest of the clarified wort is drawn off from the first tank via the bottom of the latter.

2. Process according to claim 1, characterised in that the rest of the clarified wort is drawn off from the first tank, acting as a decanter, after the closure of the valve mounted in the second aforesaid pipe, by opening a valve mounted in a third pipe connected to this second pipe upstream of the valve with which this second pipe is equipped.

3. Process according to either one of claims 1 and 2, characterised in that the drawing-off of wort from the first tank via the first pipe with a floating end is interrupted, and the drawing-off of the rest of the clarified wort contained in the first tank via the bottom of the latter is started, when the wort reaches therein a predetermined level at which all the sludge and spent hops have been collected in the second tank.

4. Process according to any one of the preceding claims, characterised in that the sludge and spent hops of the second tank are discharged by opening a valve located in a fourth pipe connected to the bottom of this second tank, whilst the valve mounted in the second pipe connecting the first tank to the second tank is closed.

5. Process according to any one of the preceding claims, characterised in that the second tank is maintained in communication with the atmosphere, until the mass of sludge and spent hops collected in the second tank reaches a first predetermined level.

6. Process according to claim 5, characterised in that, when the mass of sludge and spent hops reaches in the second tank a second predetermined level higher than the first predetermined level, a compressed gas is introduced into the second tank in order to maintain therein a constant level of the mass of sludge and spent hops.

7. Apparatus for putting into practice the process according to any one of the preceding claims, comprising a first tank with an inclined bottom serving as a decanter, the capacity of which is at least equal to that of a mash-tub and which has, in its upper part, an inlet for warm wort and communication with the atmosphere, a second tank having a capacity of 2 to 5 % of that of the first tank, a first pipe having a free end capable of floating permanently on the surface of the warm wort introduced into the first tank and serving for drawing off clarified wort from the first tank, and a second pipe equipped with a valve connecting the first tank to the second tank, characterised in that it incorporates a third pipe equipped with a valve making it possible to draw off the rest of the clarified wort from the first tank via the bottom of the latter.

8. Apparatus according to claim 7, characterised in that the third aforesaid pipe is connected to the second aforesaid pipe upstream of the valve mounted in this second pipe.

9. Apparatus according to either one of the claims 7 and 8, characterised in that it incorporates means for interrupting the drawing-off of clarified wort from the first tank when the level of the wort has descended in this first tank to a predetermined level.

10. Apparatus according to claim 9, characterised in that the aforesaid means simultaneously causes the closure of the valve located in the pipe connecting the first tank to the second tank and the opening of the valve located in the aforesaid third pipe for drawing off the rest of the clarified wort from the first tank.

11. Apparatus according to any one of claims 7 to 10, characterised in that a fourth pipe equipped with a valve is connected to the bottom of the second tank for the purpose of discharging from the latter the sludge and spent hops when the valve located in the aforesaid second pipe is closed.

12. Apparatus according to any one of claims 7 to 11, characterised in that the second tank is equipped with its upper part with a device making it possible to put it in communication with the atmosphere.

13. Apparatus according to any one of claims 7 to 12, characterised in that the second tank is equipped in its upper part with a device making it possible to put it in communication with a source of compressed gas serving to maintain a predetermined level in this second tank.

**Ansprüche**

1. Verfahren zum Klären einer warmen Brauereiwürze unter Entfernen des Trubes und des verbrauchten Hopfens, die darin enthalten sind, bei welchem Verfahren warme Würze in den oberen Teil eines ersten, als Dekanteur dienenden Behälters mit geneigtem Boden und einer Kapazität von zumindest gleich dem Volumen eines Sudes eingebracht wird, wobei der Trub und der verbrauchte Hopfen durch die Schwerkraft zum geneigten Boden des ersten Behälters absinken gelassen werden, geklärte Würze aus diesem ersten Behälter über eine erste Leitung mit einem freien, permanent auf der Oberfläche der im ersten Behälter enthaltenen Würze schwimmfähigen Ende abgezogen wird, dadurch gekennzeichnet, daß während des Abziehens von geklärten Würze aus dem ersten als Dekanteur dienenden Behälter über die erste Leitung der Trub und der verbrauchte Hopfen in einem zweiten, als Sammelbehälter dienenden Behälter mit einer Kapazität von 2 bis 5 % von jener des ersten Behälters absetzen gelassen werden, wobei ein in einer zweiten, den ersten Behälter mit dem zweiten Behälter verbindenden Leitung vorgesehenes Ventil offengehalten wird, danach das in der zweiten Leitung angebrachte Ventil geschlossen wird und der Rest der geklärten Würze aus dem ersten Behälter über den Boden desselben abgezogen wird.

2. Verfahren nach Anspruch 1, dadurch gekennzeichnet, daß der Rest der geklärten Würze aus dem ersten, als Dekanteur dienenden Behälter nach Schließen des in der zweiten Leitung angebrachten Ventils unter Öffnen eines in einer dritten, an diese zweite Leitung oberhalb des Ventils dieser zweiten Leitung angeschlossenen Leitung angebrachten Ventils abgezogen wird.

3. Verfahren nach einem der Ansprüche 1 und 2, dadurch gekennzeichnet, daß das Abziehen von Würze aus dem ersten Behälter über die erste Leitung mit schwimmendem Ende unterbrochen wird und mit dem Abziehen des Restes der im ersten Behälter enthaltenen geklärten Würze über den Boden desselben dann begonnen wird, wenn die Würze dort ein vorbestimmtes Niveau erreicht hat, bei dem sich der gesamte Trub und verbrauchte Hopfen im zweiten Behälter gesammelt haben.

4. Verfahren nach einem der voranstehenden Ansprüche, dadurch gekennzeichnet, daß der Trub und der verbrauchte Hopfen aus dem zweiten Behälter durch Öffnen eines in einer vierten, mit dem Boden dieses zweiten Behälters verbundenen Leitung vorgesehenen Ventils entleert werden, während das in der zweiten, den ersten Behälter mit dem zweiten Behälter verbindenden Leitung angebrachte Ventil geschlossen ist.

5. Verfahren nach einem der voranstehenden Ansprüche, dadurch gekennzeichnet, daß der zweite Behälter mit der Atmosphäre in Verbindung gelassen wird, bis die im zweiten Behälter gesammelte Masse an Trub und verbrauchtem Hopfen ein erstes vorbestimmtes Niveau erreicht hat.

6. Verfahren nach Anspruch 5, dadurch gekennzeichnet, daß, wenn die Masse an Trub und verbrauchtem Hopfen im zweiten Behälter ein vorbestimmtes zweites Niveau oberhalb des ersten vorbestimmten Niveaus erreicht, ein Druckgas in den zweiten Behälter eingeleitet wird, um dort ein konstantes Niveau der Masse an Trub und verbrauchtem Hopfen aufrecht zu halten.

7. Vorrichtung zur Durchführung des Verfahrens nach einem der vorhergehenden Ansprüche, mit einem ersten Behälter mit geneigtem Boden, der als Dekanteur dient und dessen Kapazität zumindest gleich jener eines Sudes ist und der in seinem oberen Teil einen Einlaß für die warme Würze und eine Verbindung mit der Atmosphäre aufweist, einem zweiten Behälter mit einer Kapazität von 2 bis 5 % von jener des ersten Behälters, einer ersten Leitung mit einem freien, permanent auf der Oberfläche der in den ersten Behälter eingebrachten warmen Würze schwimmfähigen und zum Abziehen von geklärten Würze aus dem ersten Behälter dienenden Leitung sowie einer zweiten, mit einem Ventil versehenen, den ersten Behälter mit dem zweiten Behälter verbindenden Leitung, dadurch gekennzeichnet, daß sie eine dritte mit einem Ventil versehene Leitung umfaßt, welche das Abziehen des Restes der geklärten Würze aus dem ersten Behälter über den Boden desselben gestattet.

8. Vorrichtung nach Anspruch 7, dadurch gekennzeichnet, daß die dritte Leitung mit der zweiten Leitung oberhalb des in dieser zweiten Leitung angebrachten Ventils verbunden ist.

9. Vorrichtung nach einem der Ansprüche 7 und 8, dadurch gekennzeichnet, daß sie Mittel zum Unterbrechen des Abziehens von geklärten Würze aus dem ersten Behälter umfaßt, wenn das Niveau der Würze in diesem ersten Behälter bis auf ein vorbestimmtes Niveau abgesunken ist.

10. Vorrichtung nach Anspruch 9, dadurch gekennzeichnet, daß die genannten Mittel gleichzeitig das Schließen des in der den ersten Behälter mit dem zweiten Behälter verbindenden Leitung vorgesehenen Ventils und das Öffnen des in der dritten Leitung vorgesehenen Ventils bewirken, zwecks Abziehens des Restes der geklärten Würze aus dem ersten Behälter.

11. Vorrichtung nach einem der Ansprüche 7 bis 10, dadurch gekennzeichnet, daß eine vierte, mit einem Ventil versehene Leitung mit dem Boden des zweiten Behälters zur Entleerung des Trubes und des verbrauchten Hopfens aus demselben verbunden ist, wenn das in der zweiten Leitung vorgesehene Ventil geschlossen ist.

12. Vorrichtung nach einem der Ansprüche 7 bis 11, dadurch gekennzeichnet, daß der zweite Behälter in seinem oberen Teil mit einer Einrichtung versehen ist, die eine Verbindung desselben mit der Atmosphäre gestattet.

13. Vorrichtung nach einem der Ansprüche 7 bis 12, dadurch gekennzeichnet, daß der zweite Behälter in seinem oberen Teil mit einer Einrichtung versehen ist, die eine Verbindung desselben mit einer Druckgasquelle zwecks Aufrechterhaltung eines vorbestimmten Niveaus in diesem zweiten Behälter ermöglicht.

0 029 624